Europäisches Patentamt

European Patent Office

Office européen des brevets

(11) Publication number: **0 058 908**
A1

(19)

(12)

# EUROPEAN PATENT APPLICATION

(21) Application number: **82101108.7**

(51) Int. Cl.³: **B 01 D 35/20**

(22) Date of filing: **15.02.82**

---

(30) Priority: **23.02.81 ZA 811193**

(43) Date of publication of application: **01.09.82**
**Bulletin 82/35**

(84) Designated Contracting States: **AT BE CH DE FR GB IT LI LU NL SE**

(71) Applicant: **DELKOR TECHNIK (PROPRIETARY) LIMITED, Delkor House 19 Wellington Road, Parktown Transvaal (ZA)**

(72) Inventor: **Altmann, Werner Hartmut, Stand No. 67 Carlswald, Halfwy House Transvaal (ZA)**

(74) Representative: **Wey, Hans-Heinrich, Dipl.-Ing. et al, Patentanwälte Müller-Börner Wey & Körner Widenmayerstrasse 49, D-8000 München 22 (DE)**

---

(54) **Improved drying of filter cakes.**

(57) A method of improving drying of a filter cake is disclosed, which includes vibrating the cake, preferably at a frequency of between 0,1 Hz to 10 kHz. A respective drying improving means includes a vibrating means, preferably containing a freely rotatable roller (52) which may be eccentrically mounted.

COMPLETE DOCUMENT

0058908

IMPROVED DRYING OF FILTER CAKES

THIS INVENTION relates to a method of improving drying of filter cakes or residues and to a drying means for improving drying of the cake.

Dewatering of slurries is done on various types of filtration equipment including horizontal vacuum belt filters. The final moisture obtainable will depend on :

a. the differential pressure across the filter cake,

b. the wetting characteristics of the solids material, and

c. the state of packing of the solids particles i.e. whether it is cubical packing, hexagonal packing or any combination thereof.

The various packing states will have an effect on the percentage void in the filter cake. As the moisture content in a filter cake, provided that the solids are non absorbent, will be confined to the voids it stands to reason that by reducing the void by moving towards a hexagonal packing state, i.e. a more compact packing, the moisture content as expressed as a percentage of the total solids mass will decrease with increased compaction.

0058908

According to the invention, there is provided a method of improving drying of a filter cake, which includes vibrating the cake.

The cake may be vibrated directly, or may be vibrated indirectly by vibrating the entire filter apparatus or suitable components thereof. For example, where the filter includes a filter cloth supported on a belt, the belt and/or the cloth may be vibrated.

The cake may be caused to vibrate in a direction preferably transverse to the surface upon which it is supported. Thus with a horizontal belt filter, a vertical vibration of the cake may be preferred.

The cake may be vibrated at a frequency which is at least partly in accordance with the speed of travel of the supporting surface. The frequency of vibration may be as low as 0.1 Hz or high as several KHz, depending on the speed of travel of the belt.

Vibration of the cake may be effected directly by a vibrating means which may include a roller which, in use, is in contact with the top surface of the cake.

The invention accordingly extends to a drying improving means for improving drying of the cake, which includes a vibrating means for vibrating the cake.

- 4 -

0058908

As indicated above, the vibrating means may include a roller which may be freely rotatable.  A separate vibrator may be provided for vibrating the roller.

Instead, the drying improving means may include a roller which vibrates under rotation because of some feature inherent in its construction or its orientation relative to the supporting surface upon which the cake collects.  For example, the roller may be eccentrically mounted.  The vibrating means may then suitably include a motor for rotatably driving the roller.

Still further, the invention extends to a horizontal vacuum belt filter which includes a drying means in accordance with the invention.

It is the Applicant's experience that voidage can be reduced by up to 25% by proper compaction, with a proportional reduction in residual moisture.  This is particularly important when the filtration operation is followed by theremal drying as the energy input into the vibration system is only a fraction of that used in thermal drying to achieve the same moisture reduction.

The invention is now described by way of example, with reference to the accompanying diagrammatic drawings in which;

Figure 1 shows a plan view of a drying improving means in the form of a motor-driven eccentrically mounted roller, for use according to the method of the invention;

Figure 2 shows an end view along II-II of the roller of Figure 1;

Figure 3 shows a part sectional plan view of a second embodiment of a drying improving means in the form of a roller and a vibrator therefor, for use according to the method of the invention; and

Figure 4 shows a side view along IV-IV of the drying improving means of Figure 3.

In the drawings, reference numeral 10 generally indicates a drying improving means for use in accordance with the method of the invention. Like reference numerals are used in the various drawings to show the same parts, unless otherwise specified.

Both embodiments of the invention are for use with a horizontal vacuum belt filter which includes a frame, and a filter cloth supported on a transporting belt, and which causes solid filter cake or residue to collect on the cloth in use.

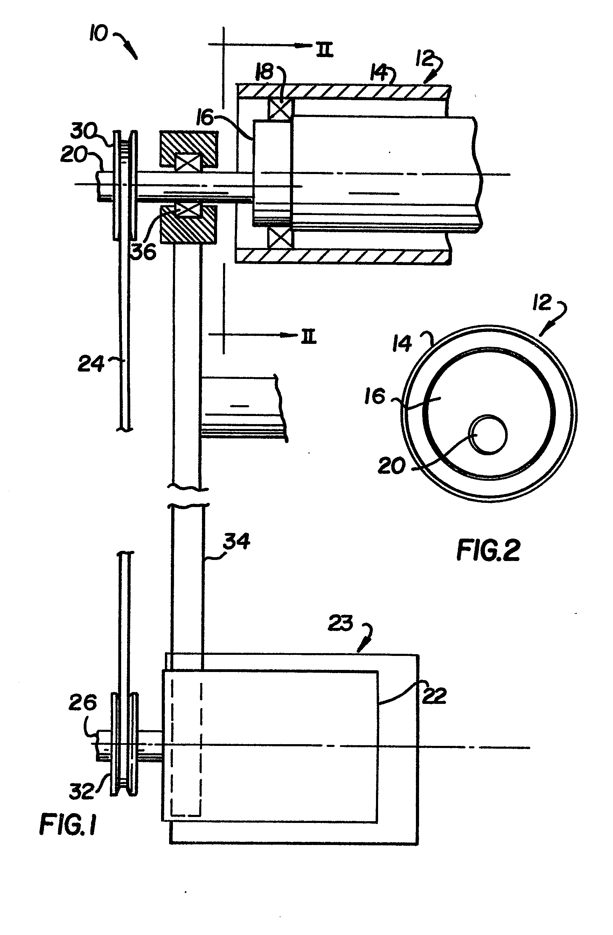

The embodiment of the invention as shown in Figures 1 and 2 will be described first.

The drying improving means 10 includes a cylindrical roller 12 comprising a shell 14 and a core 16 rotatably mounted within the shell 14 by means of bearings 18. The core 16 has an eccentrically located fixed shaft 20 which extends outwardly from each end thereof, and projects from either side of the roller 12.

The drying improving means 10 also includes an electric DC motor 22 having a housing 23, for rotating the roller core 16 via a drive belt 24.

The roller shell 14 is freely rotatable on the bearings 18, with respect to the core 16.

The motor 22 has a rotatable shaft 26 which it drives in use. The shaft 26 is connected with the core shaft 20 via the drive belt 24 by means of pulley wheels 30 and 32 fast with the shafts 20 and 26 respectively.

A locating arm 34 is attachable to each end of the core shaft 20, and is also attachable to a mounting means (not shown) on the corresponding side of the filter frame (not shown), for suitably locating the roller 12 on the filter cloth (not shown). The arms 34 are attachable to the core shaft 20 via bearings 36.

The motor 22 is suitably located e.g. adjacent the frame (not shown) for suitably driving and hence rotating the roller core 16 in use.

0058908

In use, the drying improving means 10 is suitably assembled and the roller 12 is located transverse to the direction of travel of the filter cloth (not shown) such that the roller 12 will suitably contact the cake (not shown) which collects on the cloth during the filtration process. The electric motor 22 is started up, and rotates the roller core 16 about the longitudinal axis of its eccentrically located fixed shaft 20. The roller 12 is thereby caused to vibrate. This vibration is transferred directly to the filter cake contacting the roller 12, and thence to the filter cloth and to the rest of the cake thereon. Excess liquid in the cake is freed therefrom by the vibration, and is drawn off by vacuum during the continuing filtering process.

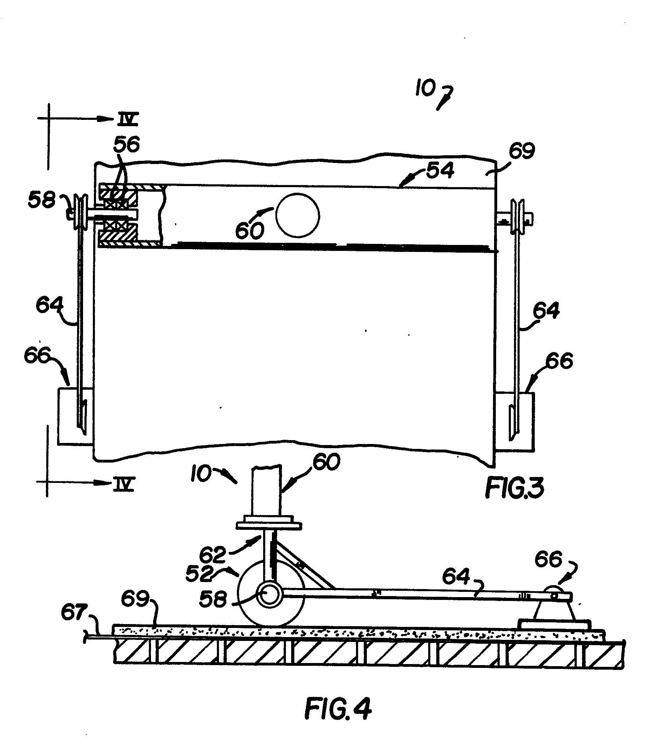

The embodiment of the invention as represented in Figures 3 and 4 will now be described.

The drying improving means 10 includes a cylindrical roller 52 freely rotatable on bearings 56 about a shaft 58 coaxial with the longitudinal axis of the roller 52 and extending outwardly from each end thereof.

The drying improving means 10 also includes a vibrator 60 which is fixed to the roller 52 via a support member 62 fast with one end of the shaft 58.

A locating arm 64 is attached to each end of the roller shaft 58 and is also attached to a mounting means 66 adjacent the corresponding side of the filter frame (not shown), for suitably locating the roller 52 on the filter cloth 67.

In use, the drying improving means 10 is suitably assembled, and the roller 52 is located transversely to the direction of travel of the filter cloth 67 such that the roller 52 will suitably contact the filter cake 69 which collects on the cloth during the filtration process. The vibrator 60 is set in motion, thus causing the shaft 58 and hence the entire roller 52 to vibrate. This vibration is transferred directly to the filter cake contacting the roller 12, and thence to the filter cloth and to the rest of the cake thereon. Excess liquid in the cake is freed therefrom by the vibration, and is drawn off by vacuum during the continuing filtering process.

0058908

1.      A method of improving drying of a filter cake which includes vibrating the cake.

2.      A method as claimed in Claim 1, in which the cake is vibrated directly.

3.      A method as claimed in Claim 1, in which the cake is vibrated indirectly by vibrating an entire filter apparatus or suitable components thereof.

4.      A method as claimed in any one of Claims 1 to 3, in which the cake is vibrated in a direction transverse to the surface upon which it is supported.

5.      A method as claimed in Claim 4, in which the cake is vibrated at a frequency at least partly in accordance with the speed of travel of the supporting surface.

6.      A method as claimed in Claim 4 or Claim 5, in which the supporting surface is a filter cloth on a horizontal belt filter and the cake is caused to vibrate in a vertical direction.

7.      A method as claimed in any one of Claims 1 to 6, in which the cake is vibrated at a frequency of between 0,1 Hz to 10,000 Hz.

8.      A drying improving means for improving drying of a filter cake, which includes a vibrating means for vibrating the cake.

9.      A drying improving means as claimed in Claim 8, in which the vibrating means includes a freely rotatable roller.

10.      A drying improving means as claimed in Claim 9, which includes a vibrator for vibrating the roller.

11.      A drying improving means as claimed in Claim 8, in which the vibrating means includes a roller which vibrates under rotation because of some feature inherent in its construction or its orientation relative to a supporting surface for the filter cake.

12.      A drying improving means as claimed in Claim 11, in which the roller is eccentrically mounted, and a motor is provided for rotatably driving the roller.

13.      A horizontal vacuum belt filter which includes a drying improving means as claimed in any one of Claims 8 to 12.

FIG.2

FIG.1

_2/2

**FIG.3**

**FIG.4**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 166 034 (A.G. BODINE) <br><br> * the whole document * <br><br> --- | 1,2,4, 5,7,8, 9,10 | B 01 D 35/20 |
| X | US-A-4 255 269 (B. TIMMER) <br><br> * column 3, lines 10-12; column 4, lines 43-61; figures * <br><br> --- | 1,3,4, 6,8,9, 11,13 | |
| X | FR-A-1 042 558 (SOC. DES COULEURS ZINCIQUES) <br><br> * the whole document * <br><br> --- | 1,2,4, 6,8,9, 10,13 | |
| X | US-A-4 137 159 (H.T. SAWYER) <br><br><br> * the whole document * <br><br> --- | 1,3,4, 5,6,7, 8,9,10 ,13 | **TECHNICAL FIELDS SEARCHED (Int. Cl. ³)** <br><br> B 01 D |
| X | GB-A- 800 355 (H. HALSTRICK) <br><br> * the whole document * <br><br> ----- | 1,3,4, 5,6,7, 8,9,13 | |

The present search report has been drawn up for all claims

| Place of search | Date of completion of the search | Examiner |
|---|---|---|
| THE HAGUE | 28-05-1982 | PYFFEROEN K. |